# EUROPÄISCHE PATENTSCHRIFT

(11) **EP 2 657 645 B1**
(45) Veröffentlichungstag und Bekanntmachung des Hinweises auf die Patenterteilung: **06.01.2016**
(21) Anmeldenummer: 13165565.6
(22) Anmeldetag: 26.04.2013
(51) Int. Cl.: G01S 15/87, G01S 15/04, G01N 29/27, G01N 29/11, B65H 23/02, G01B 17/06

(54) **Vorrichtung zum Detektieren einer Kante einer Materialbahn**
Device for detecting an edge of a sheet of material
Dispositif de détection d'un bord d'une bande de matériau

(30) Priorität: 27.04.2012 DE 202012004305 U
(43) Veröffentlichungstag der Anmeldung: 30.10.2013
(73) Patentinhaber: Texmag GmbH Vertriebsgesellschaft, 8800 Thalwil (CH)
(72) Erfinder: Zwerger, Lars, 86163 Augsburg (DE); Krauth, Wolfgang, 86316 Friedberg (Bayern) (DE); Franz, Günter, 86485 Biberbach (DE)
(74) Vertreter: Peterreins Schley

(56) Entgegenhaltungen:
- WO-A2-2008/121238
- DE-U1-202011 002 054
- US-A1- 2006 048 577

## Beschreibung

### Technisches Gebiet

Die vorliegende Erfindung betrifft eine Vorrichtung zum Detektieren einer Materialbahn unter Benutzung von Ultraschallsensoren. Derartige Vorrichtungen werden beispielsweise zum berührungslosen Abtasten von Bahnkanten von Papier-, Stoff- oder Folienbahnen verwendet. Vorrichtungen mit Ultraschallsensoren eignen sich insbesondere für tamsparente oder lichtempfindliche Materialbahnen, wo der Einsatz optischer Sensoren nur bedingt möglich ist.

### Hintergrund

Bekannt sind Vorrichtungen zum Detektieren der Kante einer Materialbahn mit mehreren Ultraschallsensoren, wie beispielsweise in US 7,357,027 B2 gezeigt. Um einen gewissen Messbereich bereitzustellen, wird in diesen Vorrichtungen eine Vielzahl von einzelnen Ultraschallsensoren in einem Feld angeordnet, wobei jeder einzelne Ultraschallsensor ein Ultraschall-Senderelement und ein Ultraschall-Empfängerelement umfasst. Jedem Ultraschall-Empfängerelement ist dabei ein eigenes Ultraschall-Senderelement zugeordnet, dass dieses mit einem Ultraschallsignal beaufschlagt. Derartige Vorrichtungen benötigen eine große Anzahl von Sender- und Ultraschall-Empfängerelementen, was die Komplexität und die Kosten der Vorrichtung steigert.
Das Gebrauchsmuster Nr. DE 20 2011 002 054 U1 offenbart eine Vorrichtung zum Detektieren einer Kante einer Materialbahn oder der Kantenposition in einer Messrichtung, umfassend mindestens einen Ultraschallsensor, wobei der Ultraschallsensor ein Senderelement und ein Empfängerelement umfasst, wobei die äußere Kontur mindestens eines des Senderelements und/oder Empfängerelements mindestens eine Bogensegmentseite und mindestens eine abgeflachte Seite umfasst.

### Zusammenfassung der Erfindung

Die vorliegende Erfindung betrifft Vorrichtung zum Detektieren einer Kante einer Materialbahn gemäß Anspruch 1. Weitere Ausführungsformen werden in den abhängigen Ansprüchen beschrieben.

Ein Ultraschallsensor umfasst zumindest die Bauteile, die zum Erzeugen eines ersten Ultraschallsignals ("Ultraschall-Senderelement") und zum Detektieren eines zweiten Ultraschallsignals ("Ultraschall-Empfängerelement"), dass durch die Wechselwirkung des ersten Ultraschallsignals mit der zu detektierenden Materialbahn erzeugt wird, nötig sind.

Ein Ultraschall-Empfängerelement ist ein Bauteil, dass ein Ultraschallsignal detektiert, indem es ein einfallendes Ultraschallsignal in ein elektrisches Signal umsetzt. Als Ultraschall-Empfängerelement wird ein einzeln auslesbares Bauteil bezeichnet. Das heißt, ein Ultraschall-Empfängerelement erzeugt einen einzelnen Messwert, der von dem Schalldruck des einfallenden Ultraschallsignal und/oder der von dem einfallenden Ultraschallsignal beschallten Fläche des Ultraschall-Empfängerelements abhängt.

Ein Ultraschall-Senderelement ist ein Bauteil, das ein Ultraschallsignal erzeugt, indem es ein elektrisches Signal in ein ausgesendetes Ultraschallsignal umsetzt. Als Ultraschall-Senderelement wird ein einzeln ansteuerbares Bauteil bezeichnet. Das heißt, ein Ultraschall-Senderelement erzeugt aus einen einzelnen elektrischen Signal (das aber durchaus an einer Vielzahl von Orten des Ultraschall-Senderelements gleichzeitig anliegen kann), das ausgesendete Ultraschallsignal. Als Ultraschall-Nutzsignal wird ein Ultraschallsignal bezeichnet, das an einem Ultraschall-Empfängerelement in ein Signal (oder einen Signalanteil) umgesetzt werden kann, das zur Detektion der Kante der Materialbahn nutzbar ist. Im Gegenteil dazu wird ein Ultraschall-Störsignal zwar in einem Ultraschall-Empfängerelement in ein elektrisches Signal umgesetzt, das aber von der Vorrichtung nicht zur Detektion der Kante genutzt werden kann. Störsignale ergeben sich, zum Beispiel, durch unerwünschte Reflexionen oder nicht perfekte Fokussierung eines Ultraschallsignals.

Der Teil des Ultraschall-Empfängerelements, der die Wandlung vom Ultraschallsignal zum elektrischen Signal bewirkt, wird als Ultraschall-Transducerelement bezeichnet. Entsprechend wird auch der Teil des Ultraschall-Senderelements, der die Wandlung vom elektrischen Signal zum Ultraschallsignal bewirkt, als Ultraschall-Transducerelement bezeichnet.

Ein Ultraschallsensor kann nur ein Empfänger- und Ultraschall-Senderelement aufweisen, aber auch eine Vielzahl von Empfänger- und/oder Ultraschall-Senderelementen, um die Kante einer Materialbahn zu detektieren.

Unter den Begriff Materialbahn fallen Strukturen eines Materials, die in zwei Raumrichtungen erheblich stärker ausgedehnt sind als in der dritten. Dabei kann die Materialbahn Aussparungen und Öffnungen aufweisen. Auch muss die Materialbahn nicht zusammenhängen. Insbesondere fallen unter den Begriff Materialbahn Gewebe und Netze, aber auch eine Reihe von Kettfäden vor dem Einbringen der Schussfäden eines Gewebes, die ebenfalls eine Materialbahn bilden.

Sämtliche dieser Materialbahnen sind in einer der zwei ausgedehnten Raumrichtungen durch jeweils eine Kante begrenzt, die unter Verwendung der erfindungsgemäßen Vorrichtung detektiert werden kann. Dabei kann Detektieren einer Kante lediglich die Feststellung umfassen, dass sich eine Kante in einem Messbereich befindet. Darüber hinaus kann Detektieren einer Kante umfassen, dass eine Position der Kante detektiert wird (zum Beispiel als Versatz gemessen zu einem festgelegten Nullpunkt). Detektieren einer Kante einer Materialbahn umfasst weiterhin das Detektieren beider Kanten, die die Materialbahn in einer Raumrichtung begrenzen. Damit kann eine Breite der Materialbahn oder eine Lage der Materialbahn bestimmt werden. Auch kann damit eine Stauchung oder Dehnung der Materialbahn ermittelt werden.

Mit den erfindungsgemäßen Vorrichtungen können Materialbahnen detektiert werden, die Materialien umfassen, die zumindest einen Teil eines Ultraschallsignals reflektieren, absorbieren oder transmittieren. Insbesondere können Materialbahnen aus Kunststoff, Papier, Pappe oder Textilien detektiert werden.

Ein weiteres Beispiel betrifft eine Vorrichtung zum Detektieren einer Kante einer Materialbahn. Die Vorrichtung umfasst einen Ultraschallsensor, der ein Ultraschall-Empfängerelement und ein Ultraschall-Senderelement umfasst, wobei das Ultraschall-Senderelement ein Ultraschall-Transducerelement umfasst, das ein Piezokomposit-Material umfasst.

Piezokomposit-Materialien umfassen Materialien, in denen piezoelektrisch aktive Materialien (wie zum Beispiel Piezokeramiken) mit "passiven" Materialien (wie zum Beispiel bestimmten Polymeren) integral verbunden sind. Piezokomposit-Materialien umfassen auch Piezokeramiken, die mit piezoelektrisch aktiven Polymeren oder anderen Kunststoffen integral verbunden sind.

Ein weiteres Beispiel betrifft eine Vorrichtung zum Detektieren einer Kante einer Materialbahn. Die Vorrichtung umfasst einen Ultraschallsensor, der ein Ultraschall-Empfängerelement und ein Ultraschall-Senderelement umfasst, wobei das Ultraschall-Empfängerelement ein Ultraschall-Transducerelement umfasst, das ein Piezokomposit-Material umfasst.

Durch den Einsatz eines Piezokomposit-Materials kann, im Vergleich zu herkömmlichen Vollkeramik-Ultraschall-Transducerelementen, eine höhere Flexibilität in der Gestaltung der Ultraschall-Senderelement und/oder Ultraschall-Empfängerelemente erreicht werden. Die Piezokomposit-Materialien können vergleichsweise einfach in (beinahe) beliebige Formen gebracht werden. Insbesondere können lange (zum Beispiel länger als 20 mm) einteilige Ultraschall-Transducerelemente aus einem Piezokomposit-Material hergestellt werden. Damit können die erfindungsgemäßen Vorrichtungen weniger komplex sein (insbesondere bei einem großen Messbereich) als herkömmliche Vorrichtungen, da sich zum Beispiel der Aufbau der Ansteuerschaltung der Vorrichtung vereinfacht. Zudem ist bei der Verwendung von Piezokomposit-Materialien, im Gegensatz zu der Situation beim Einsatz von Vollkeramik-Materialien, keine offenzellige poröse Ankoppelschicht an Luft nötig. Vielmehr kann die Ankoppelschicht abgeschlossen und glatt sein. Das kann zu einer verbesserten chemischen Beständigkeit führen, kann die Empfindlichkeit gegenüber Verschmutzung verringert und kann überstehende Teile überflüssig machen, was zu einer geringeren Ausfall- und/oder Wartungszeit der Vorrichtung und somit zu geringeren Betriebskosten führen kann.

Durch die Verwendung eines gemeinsamen Ultraschall-Transducerelements für mehrere Ultraschall-Senderelemente und/oder Ultraschall-Empfängerelemente kann die Flexibilität der Vorrichtung erhöht werden und die Komplexität in der Herstellung reduziert werden. Insbesondere für Vorrichtungen mit einem großen Messbereich (zum Beispiel länger als 20 mm) können durch den Einsatz eines gemeinsamen Ultraschall-Transducerelements mit einer (im Vergleich zu herkömmlichen Vorrichtungen) stark reduzierten Anzahl von Teilen auskommen. Das erleichtert den Aufbau der Vorrichtung. Weiterhin ist es beispielsweise möglich, die Ultraschall-Senderelemente und/oder Ultraschall-Empfängerelemente durch Strukturieren der auf dem gemeinsamen Ultraschall-Transducerelement aufgebrachten Elektroden zu bilden. Das kann eine äußerst flexible und kostengünstige Möglichkeit sein, an verschiedene Messanforderungen angepasste Vorrichtungen zu schaffen.

Ein weiteres Beispiel betrifft eine Vorrichtung zum Detektieren einer Kante einer Materialbahn. Die Vorrichtung umfasst mindestens einen Ultraschallsensor, wobei der Ultraschallsensor mindestens ein Ultraschall-Senderelement und mindestens ein Ultraschall-Empfängerelement umfasst, wobei, einen Messbereich von mehr als 10 mm senkrecht zur Laufrichtung der Materialbahn vollständig abzudecken, in dem die Kante der Materialbahn detektiert werden kann, und wobei das Ultraschall-Transducerelement des Ultraschall-Senderelements und/oder des Ultraschall-Empfängerelements einstückig ausgebildet ist und wobei das Ultraschall-Transducerelement des Ultraschall-Senderelements und/oder des Ultraschall-Empfängerelements einen Messbereich von mehr als 10 mm senkrecht zur Laufrichtung der Materialbahn vollständig abzudecken, in dem die Kante der Materialbahn detektiert werden kann.

Die Vorrichtung zum Detektieren einer Kante einer Materialbahn kann mehrere einstückige Ultraschall-Transducerelemente auf der Sender- beziehungsweise Empfängerseite aufweisen, die jeweils einen Messbereich von mehr als 10 mm senkrecht zur Laufrichtung der Materialbahn vollständig abdecken, in dem die Kante der Materialbahn detektiert werden kann.

Der Begriff einstückig bezeichnet ein integriertes Element (was nicht ausschließt, dass das integrierte Element aus mehreren Teilen zusammengefügt ist), wobei das Element ein Komposit-Material beinhalten kann. Im Gegensatz dazu werden in herkömmlichen Vorrichtungen eine Vielzahl von diskreten Ultraschall-Transducerelementen eingesetzt, um einen Messbereich abzudecken.

Ausführungsformen des ersten bis sechsten Aspekts können eines oder mehrere der folgenden Merkmale umfassen.

Die ein oder mehr Ultraschall-Empfängerelemente können so angeordnet sein, dass die Materialbahn zwischen den ein oder mehr Ultraschall-Senderelementen und ein oder mehr Ultraschall-Empfängerelementen durchlaufen kann, so dass die ein oder mehr Ultraschall-Senderelemente und die ein oder mehr Ultraschall-Empfängerelemente auf unterschiedlichen Seiten der Materialbahn angeordnet sind. In diesem Fall detektiert jedes Ultraschall-Empfängerelement einen an der Materialbahn vorbeilaufenden Teil des Ultraschallsignals (zusätzlich kann auch der durch die Materialbahn transmittierte Teil des Ultraschallsignals detektiert werden), um eine Kante der Materialbahn zu detektieren.

Alternativ können die ein oder mehr Ultraschall-Senderelemente und die ein oder mehr Ultraschall-Empfängerelemente auch auf derselben Seite der Materialbahn angeordnet sein. In diesem Fall detektiert jedes Ultraschall-Empfängerelement einen an der Materialbahn reflektierten Teil des Ultraschallsignals. Es ist auch möglich, auf beiden Seiten der Materialbahn ein oder mehr Ultraschall-Senderelemente und ein oder mehr Ultraschall-Empfängerelemente anzuordnen, um reflektierte und vorbeilaufende Teile (und unter Umständen transmittierte) des Ultraschallsignals zu detektieren.

Alternativ kann ein Ultraschall-Senderelement dazu ausgelegt sein, ebenfalls als Ultraschall-Empfängerelement zu fungieren. Beispielsweise kann ein Reflektor vorgesehen werden, der ein von einem Ultraschall-Senderelement ausgesandtes Ultraschallsignal reflektiert, so dass das reflektierte Signal an dem Ultraschall-Senderelement detektiert werden kann, welches somit als Ultraschall-Empfängerelement fungiert.

Der Ultraschallsensor kann ein, zwei, drei, vier oder mehr als vier Ultraschall-Empfängerelemente umfassen.

Das Ultraschall-Senderelement kann so ausgelegt sein, dass es drei oder vier der Ultraschall-Empfängerelemente mit einem Ultraschall-Nutzsignal beaufschlagt.

Die äußere Kontur mindestens eines der Senderelemente und/oder Empfängerelemente kann mindestens eine Bogensegmentseite und mindestens eine abgeflachte Seite umfassen. Damit kann die Anzahl der zum Abdecken eines bestimmten Messbereichs nötigen Elemente reduziert werden.
Jedem Ultraschall-Empfängerelement kann ein Messbereich zugeordnet sein, in dem es die Kante der Materialbahn detektieren kann, wobei die Messbereiche in einer Messrichtung direkt aneinander grenzen oder überlappen können.

Die Vorrichtung kann weiter ein Gehäuse umfassen, das einen ersten und einen zweiten Arm umfasst, wobei die ein oder mehr Ultraschall-Senderelemente an dem ersten Arm und die ein oder mehr Ultraschall-Empfängerelemente an dem zweiten Arm angeordnet sind.

Die Vorrichtung ein oder mehr Ultraschall-Empfängerelemente können dazu ausgelegt sein, die Kante der Materialbahn in einem Messbereich von mehr als 10 mm senkrecht zu einer Laufrichtung der Materialbahn zu detektieren.

Die Vorrichtung ein oder mehr Ultraschall-Empfängerelemente können dazu ausgelegt sein, die Kante der Materialbahn in einem Messbereich von mehr als 20 mm senkrecht zu einer Laufrichtung der Materialbahn zu detektieren.

Die ein oder mehr Ultraschall-Senderelemente und die ein oder mehr Ultraschall-Empfängerelemente können Ultraschall-Transducerelemente umfassen, die ein oder mehrere Piezokomposit-Materialien umfassen. Die Piezokomposit-Materialien können ein Polymer und eine Piezokeramik umfassen. Das Polymer kann ausgewählt sein aus einer Liste bestehend aus Epoxidharzen und Polyurethanen. Die Piezokomposit-Materialien können ein 1-3-Piezokomposit oder ein 2-2-Piezokomposit umfassen. Die Piezokomposit-Materialien können Stäbe aus einer Piezokeramik eingebettet in einem Polymer umfassen. Die Piezokomposit-Materialien können Blei-Zirkonat-Titanat umfassen. Die Piezokomposit-Materialien können Piezofaserkomposit-Materialien umfassen, in denen Bündel aus piezokeramischen Fasern mit einem Polymer (zum Beispiel einem Epoxidharz oder Polyurethan) infiltriert sind und so ein Piezokomposit-Material bilden.

Ein Ultraschall-Transducerelement der ein oder mehr Ultraschall-Empfängerelemente und/oder der ein oder mehr Ultraschall-Senderelemente kann flächig ausgebildet sein. Ein flächiges Element ist in zwei Raumrichtungen erheblich stärker ausgedehnt als in der dritten. Beispielsweise kann das Ultraschall-Transducerelement plattenförmig sein, wobei der Umriss des plattenförmigen Ultraschall-Transducerelements beliebig gewählt sein kann. Beispielweise kann der Umriss rechteckig oder rund sein.

Die Vorrichtung kann zwei oder mehr separat auslesbare Ultraschall-Empfängerelemente oder zwei oder mehr separat ansteuerbare Ultraschall-Senderelemente, wobei die zwei oder mehr Ultraschall-Empfängerelemente und/oder die zwei oder mehr Ultraschall-Senderelemente ein gemeinsames Ultraschall-Transducerelement aufweisen können.

Der Ultraschallsensor kann dazu ausgelegt sein, einen Messbereich von mehr als 10 mm senkrecht zur Laufrichtung der Materialbahn vollständig abzudecken, in dem die Kante der Materialbahn detektiert werden kann, und ein Ultraschall-Transducerelement der ein oder mehr Ultraschall-Senderelemente und/oder der ein oder mehr Ultraschall-Empfängerelemente kann einstückig ausgebildet sein.

Gegenüberliegenden Flächen des Ultraschall-Transducerelement der ein oder mehr Ultraschall-Empfängerelemente und/oder der ein oder mehr Ultraschall-Senderelements können mit Metallsierungen versehen sein, um das Ultraschal-Transducerelement elektrisch zu kontaktieren. Die Metallisierungen des Ultraschall-Transducerelements können so gestaltet sein, dass auf einer dem ein oder mehr Ultraschall-Senderelementen zugewandten Seite des Ultraschall-Transducerelements zwei oder mehr nicht zusammenhängende Empfängerbereiche gebildet werden, die separat auslesbar sind, um die zwei oder mehr Ultraschall-Empfängerelemente zu bilden. Dabei umfasst jedes Ultraschall-Empfängerelement einen der Empfängerbereiche als erste Elektrode, einen unterhalb des Empfängerbereichs (wobei die strukturierte Metallisierung sich an der Oberseite des Ultraschall-Transducerelements befindet) befindlichen Teil des Ultraschall-Transducerelements als aktives Element (das ein Ultraschallsignal in ein elektrisches Signal wandelt) und die (oder ein Teil der) dem Ultraschall-Senderelement abgewandte Metallisierung als zweite Elektrode.

Die Metallisierungen des Ultraschall-Transducerelements können so gestaltet sein, dass auf einer dem ein oder mehr Ultraschall-Empfängerelementen zugewandten Seite des Ultraschall-Transducerelements zwei oder mehr nicht zusammenhängende Senderbereiche gebildet werden, die separat ansteuerbar sind, um die zwei oder mehr Ultraschall-Senderelemente zu bilden. Dabei umfasst jedes Ultraschall-Senderelement einen der Senderbereiche als erste Elektrode, einen unterhalb des Senderbereichs (wobei die strukturierte Metallisierung sich an der Oberseite des Ultraschall-Transducerelements befindet) befindlichen Teil des Ultraschall-Transducerelements als aktives Element (das ein elektrisches Signal in ein Ultraschallsignal wandelt) und die (oder ein Teil der) dem Ultraschall-Empfängerelement abgewandte Metallisierung als zweite Elektrode.

Durch das Bilden von mehreren Empfänger- und/oder Senderbereichen kann in einfacher Weise eine flexible Konfiguration eines Messbereichs der Vorrichtung erzielt werden, um eine an eine vorbestimmte Messaufgabe angepasste Messempfindlichkeit zu erzielen. Zum Beispiel können die Empfängerbereiche so gestaltet sein, dass die zu detektierende Kante im gesamten Messbereich gleichzeitig über zwei oder über drei Empfängerbereichen liegt, wenn die Vorrichtung betrieben wird.

Die Empfängerbereiche können so gestaltet sein, dass sich Messbereiche der verschiedenen Empfängerbereiche überlappen. Zum Beispiel können die Empfängerbereiche so gestaltet sein, dass sich im gesamten oder einem Teil des Messbereichs die Messbereiche von zwei, drei oder mehr Empfängerelementen überlappen.

Die Empfängerbereiche können so gestaltet sein, dass bestimmte Ausschnitte des Messbereichs mit einer höheren Dichte von Empfängerbereichen ausgestattet ist als der Rest des Messbereichs der Vorrichtung.

Die Sender- und/oder Empfängerbereiche können zum Teil flächengleich sein. Die Sender- und/oder Empfängerbereiche können eine Seite des Ultraschall-Transducerelements, auf der sie sich befinden, teilweise oder komplett abdecken. Falls die komplette Abdeckung einer eine Seite des Ultraschall-Transducerelements mit flächengleichen Sender- und/oder Empfängerbereichen nicht möglich ist, kann in einem oder mehreren Randbereichen der Seite Sender- und/oder Empfängerbereiche platziert werden, die nicht flächengleich mit den übrigen Sender- und/oder Empfängerbereiche sind. Die Sender- und/oder Empfängerbereiche können einen rechteckigen oder polygonialen Umriss haben. Die Sender- und/oder Empfängerbereiche können einen Umriss haben, der durch zwei oder mehr Rechtecke oder Parallelogramme gebildet wird.

Die zwei oder mehr nicht zusammenhängenden Empfängerbereiche und/oder Senderbereiche können durch Aussparungen in der Metallisierung gebildet werden. Die Aussparungen können teilweise oder vollständig schräg, senkrecht oder parallel zu einer Laufrichtung der Materialbahn verlaufen. Alternativ können Aussparungen meänderförmig verlaufen.

Der Ultraschallsensor kann mehr als fünf oder mehr als zehn separat auslesbare Ultraschall-Empfängerelemente und oder Ultraschall-Senderelemente aufweisen, und die mehr als fünf oder mehr als zehn Ultraschall-Empfängerelemente und/oder Ultraschall-Senderelemente können ein gemeinsames Ultraschall-Transducerelement aufweisen

Die Vorrichtung kann zudem eine Steuerung umfassen, wobei die Steuerung dazu ausgelegt ist, die Sender- und Ultraschall-Empfängerelemente zu betreiben. Die Vorrichtung kann eine Auswerteschaltung umfassen, die mit den Ultraschall-Empfängerelementen (und optional den Ultraschall-Senderelementen) kommunikativ gekoppelt ist und dazu ausgelegt ist, aus von den Ultraschall-Empfängerelementen empfangen Messsignalen eine Lage der Kante der Materialbahn zu ermitteln.

Die Vorrichtung kann eine Auswerteschaltung umfassen, die mit den Ultraschall- Empfangerelementen (und optional den Ultraschall-Senderelementen) kommunikativ gekoppelt ist und dazu ausgelegt ist, aus von den Ultraschall-Empfängerelementen empfangen Messsignalen eine Lage einer zweiten Kante der Materialbahn zu ermitteln.

Die Vorrichtung kann eine Auswerteschaltung umfassen, die mit den Ultraschall-Empfängerelementen (und optional den Ultraschall-Senderelementen) kommunikativ gekoppelt ist und dazu ausgelegt ist, aus von den Ultraschall-Empfängerelementen empfangen Messsignalen die Breite der Materialbahn zu ermitteln.

Die Vorrichtung kann zudem eine Korrekturvorrichtung umfassen, die dazu ausgelegt ist, die Lage der Kante der Materialbahn zu verändern basierend auf einem Vergleich eines Lagesignals, das eine Auswerteschaltung erzeugt mit einem Soll-Lagesignal.

Die Vorrichtung kann Mittel zum Führen der Materialbahn umfassen, wobei der Ultraschallsensor so angeordnet ist, dass er die Kante einer Materialbahn in einem vorbestimmten Messbereich detektieren kann.

### Kurzbeschreibung der Figuren

**Fig. 1** zeigt eine perspektivische Ansicht einer bekannten Vorrichtung zum Detektieren der Lage einer Materialbahn.
**Fig. 2** zeigt eine perspektivische Ansicht einer erfindungsgemäßen Vorrichtung zum Detektieren der Lage einer Materialbahn.
**Fig. 3** zeigt ein schematisches Schnittbild durch die in **Fig. 2** gezeigte Vorrichtung.
**Fig. 4** zeigt eine schematische Aufsicht der Ultraschall-Empfängerelemente der in **Fig. 2** gezeigten Vorrichtung.
**Fig. 5** zeigt eine perspektivische Ansicht einer erfindungsgemäßen Vorrichtung zum Detektieren der Lage einer Materialbahn.
**Fig. 6** zeigt eine perspektivische Ansicht einer erfindungsgemäßen Vorrichtung zum Detektieren der Lage einer Materialbahn.
**Fig. 7a** bis **Fig. 7f** zeigen verschiedene schematische Ansichten von Sender- und Ultraschall-Empfängerelementen.
**Fig. 8a** bis **Fig. 8f** zeigen verschiedene schematische Ansichten von Sender- und Ultraschall-Empfängerelementen.
**Fig. 9a** bis **Fig. 9f** zeigen verschiedene schematische Ansichten von Sender- und Ultraschall-Empfängerelementen.
**Fig. 10** zeigt eine Vorrichtung zum Detektieren einer Kante einer Materialbahn und zur Korrektur eines detektierten Versatzes.

### Ausführliche Beschreibung

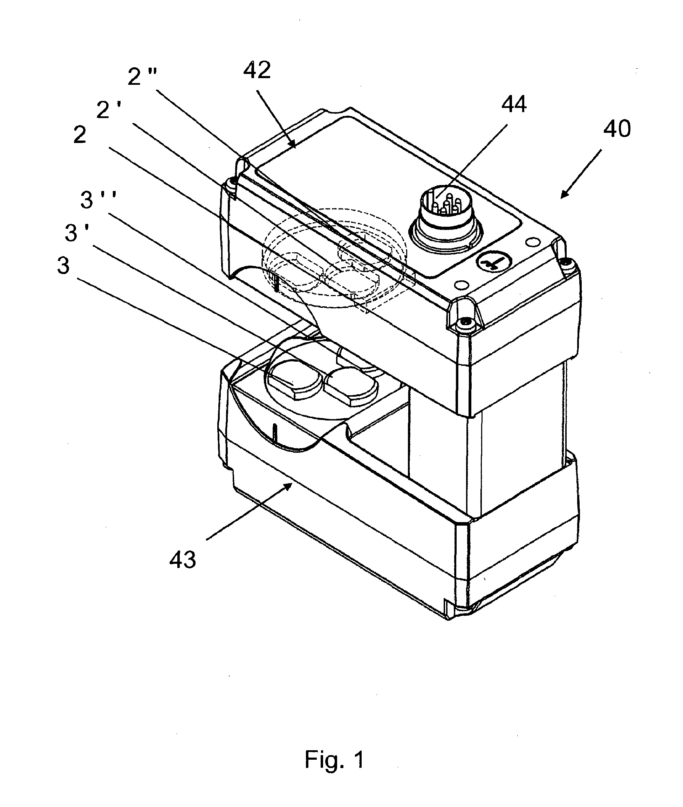

**Fig. 1** zeigt die perspektivische Ansicht einer herkömmlichen Vorrichtung 40 zum Detektieren einer Kante einer Materialbahn. Die Vorrichtung umfasst ein Gehäuse mit zwei Armen 42, 43, die ein U-förmiges Profil bilden. Im Betrieb läuft eine Kante einer Materialbahn durch den Raum, der von den beiden Armen 42, 43 umschlossen wird. Auf gegenüberliegenden Armen sind jeweils eine Mehrzahl (in **Fig. 1** drei) von diskreten Ultraschall-Empfängerelementen 2, 2', 2" und diskreten Ultraschall-Senderelemente 3, 3', 3" eines Ultraschallsensors angeordnet, wobei jedes Ultraschall-Senderelement 3, 3', 3" jeweils ein gegenüberliegendes Ultraschall-Empfängerelement 2, 2', 2" mit einem Ultraschall-Nutzsignal beaufschlagt.

Wenn sich nun die Materialbahn zwischen den beiden Armen 42, 43 der Vorrichtung 40 bewegt, so verhindert die Materialbahn, dass ein Teil des von den Ultraschall-Senderelementen 3, 3', 3" ausgesandten Ultraschallsignals das zugeordnete Ultraschall-Empfängerelement 2, 2', 2" erreicht. Dadurch reduziert sich eine Amplitude eines Messsignals des jeweiligen Ultraschall- Empfängerelements 2, 2', 2". Durch den Einsatz einer gewissen Anzahl von Ultraschall-Empfängerelementen 2, 2', 2" und deren geeignete Anordnung kann aus den Messsignalen der Ultraschall-Empfängerelemente 2, 2', 2" eine Kante (oder deren Lage) der Materialbahn detektiert werden.

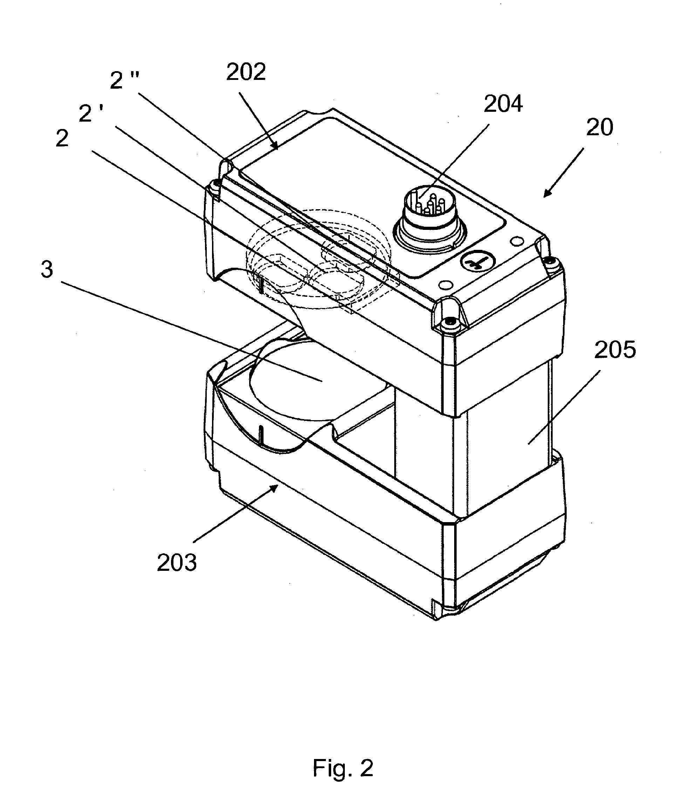

**Fig. 2** zeigt eine erfindungsgemäße Vorrichtung 20 zum Detektieren einer Kante einer Materialbahn. Die Vorrichtung umfasst ein Gehäuse 205, das einen ersten und einen zweiten Arm 202, 203 aufweist. An dem ersten Arm 202 sind eine Mehrzahl (in **Fig. 2** drei) von Ultraschall-Empfängerelementen 2, 2', 2" angeordnet, die jeweils einzeln auslesbar sind, um die Kante der Materialbahn zu detektieren. Auf dem zweiten Arm 203 ist ein einzelnes einziges Ultraschall-Senderelement 3 angeordnet. Die ausgelesenen Messsignale können zur weiteren Verarbeitung über Ausgang 204 abgegriffen werden.

Alternativ kann die Vorrichtung auch nur einen Arm umfassen, auf dem das Ultraschall-Senderelement und die mehreren Ultraschall-Empfängerelemente angeordnet sind. In diesem Fall sind das Ultraschall-Senderelement und die mehreren Ultraschall-Empfängerelemente so angeordnet, dass ein Teil des von dem Ultraschall-Senderelement ausgesendeten Ultraschall-Signals durch die Materialbahn auf die die mehreren Ultraschall-Empfängerelemente rückreflektiert wird, wenn sich die Materialbahn im Messbereich der Vorrichtung befindet. Weiterhin sind Vorrichtungen möglich, die zwei Arme umfassen und bei denen auf jedem Arm ein Ultraschall-Senderelement und mehrere Ultraschall-Empfängerelemente angeordnet sind.

Alternativ kann ein Ultraschall-Senderelement dazu ausgelegt sein, ebenfalls als Ultraschall-Empfängerelement zu fungieren. Beispielsweise kann ein Reflektor vorgesehen werden, der ein von einem Ultraschall-Senderelement ausgesandtes Ultraschallsignal reflektiert, so dass das reflektierte Signal an dem Ultraschall-Senderelement detektiert werden kann, welches somit als Ultraschall-Empfängerelement fungiert. Zum Beispiel kann das auch als Ultraschall-Empfängerelement fungierende Ultraschall-Senderelement an dem ersten Arm angeordnet werden und der Reflektor auf dem gegenüberliegenden Arm.

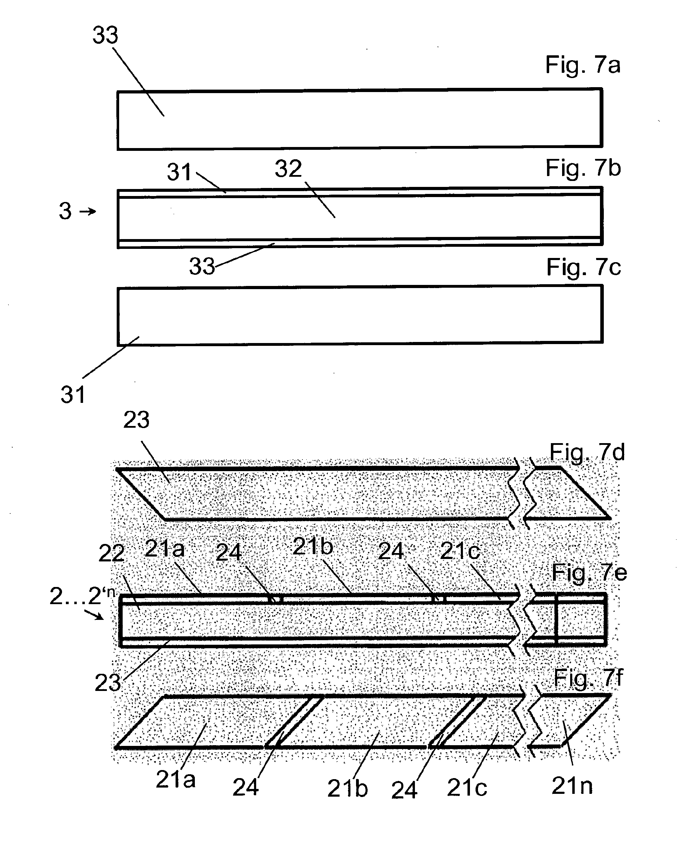

Die in **Fig. 2** gezeigte Vorrichtung 20 hat nur ein einziges Ultraschall-Senderelement 3, das mehrere Ultraschall-Empfängerelemente 2, 2', 2" (in Fig. 2 drei) mit einem Ultraschall-Nutzsignal beaufschlagt. Somit sind einem einzigen Ultraschall-Senderelement 3 mehrere Ultraschall-Empfängerelemente 2, 2', 2" zugeordnet. Die Anordnung der einzelnen Ultraschall-Sender- und Ultraschal-Empfängerelemente ist nicht auf die in **Fig. 2** gezeigte Anordnung mit einem Ultraschall-Senderelement und drei Ultraschall-Empfängerelementen beschränkt. Alternativ kann ein einziges Ultraschall-Senderelement vier oder mehr, fünf oder mehr oder zehn oder mehr Ultraschall-Empfängerelemente mit einem Ultraschall-Nutzsignal beaufschlagen. Auch kann die Vorrichtung mehrere Ultraschall-Senderelemente aufweisen, die jeweils mehr als ein Ultraschall-Empfängerelement (zum Beispiel zwei, drei oder vier) mit einem Ultraschall-Nutzsignal beaufschlagen. Eine mögliche Ausgestaltung des Ultraschall-Senderelements 3 umfasst den Einsatz eines Ultraschall-Transducerelements, das ein Piezokomposit-Material umfasst. Einzelheiten dazu sind im Zusammenhang mit den **Fig. 7** bis **Fig. 9** beschrieben.

In der in **Fig. 2** gezeigten Vorrichtung 20 beaufschlagt ein einziges Ultraschall-Senderelement 3 mehrere Ultraschall-Empfängerelemente 2, 2', 2", die als diskrete Bauteile ausgeführt sind. Das heißt, dass jedes Ultraschall-Empfängerelement 2, 2', 2" ein eigenes Ultraschall-Transducerelement aufweist und entsprechende Elektroden aufweist. Alternativ können, wie im Zusammenhang mit **Fig. 7** bis **Fig. 9** gezeigt, mehrere Ultraschall-Empfängerelemente integriert werden. Zum Beispiel können zwei oder mehr Ultraschall-Empfängerelemente ein gemeinsames Ultraschall-Transducerelement aufweisen und die zwei oder mehr Ultraschall-Empfängerelemente können durch geeignete Strukturierung der Elektroden des gemeinsamen Ultraschall-Transducerelements gebildet werden.

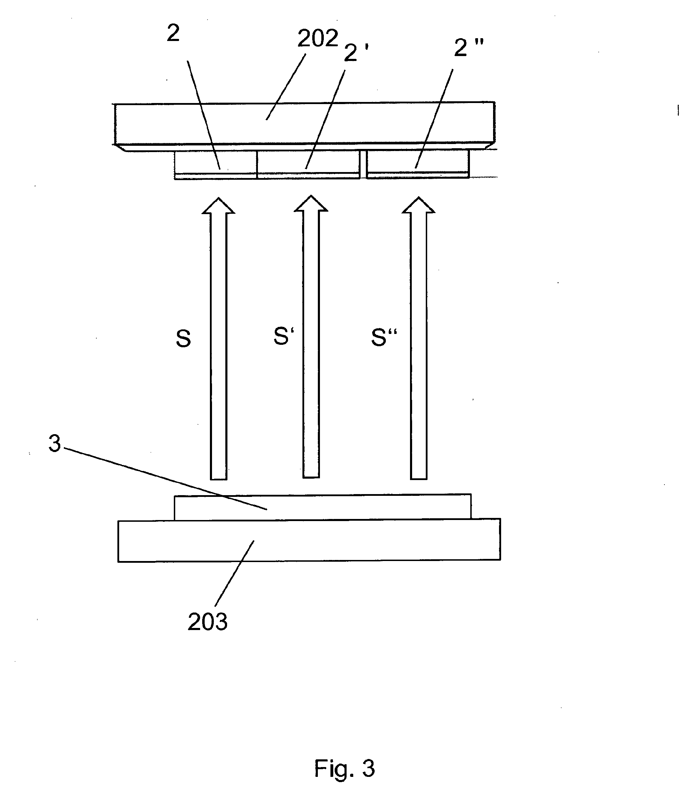

**Fig. 3** zeigt ein schematisches Schnittbild durch die in **Fig. 2** gezeigte Vorrichtung. Hier wird deutlich, dass das einzelne Ultraschall-Senderelement 3 drei Ultraschall-Empfängerelemente 2, 2', 2" mit jeweils einem Nutzsignal S, S', S" beaufschlagt.

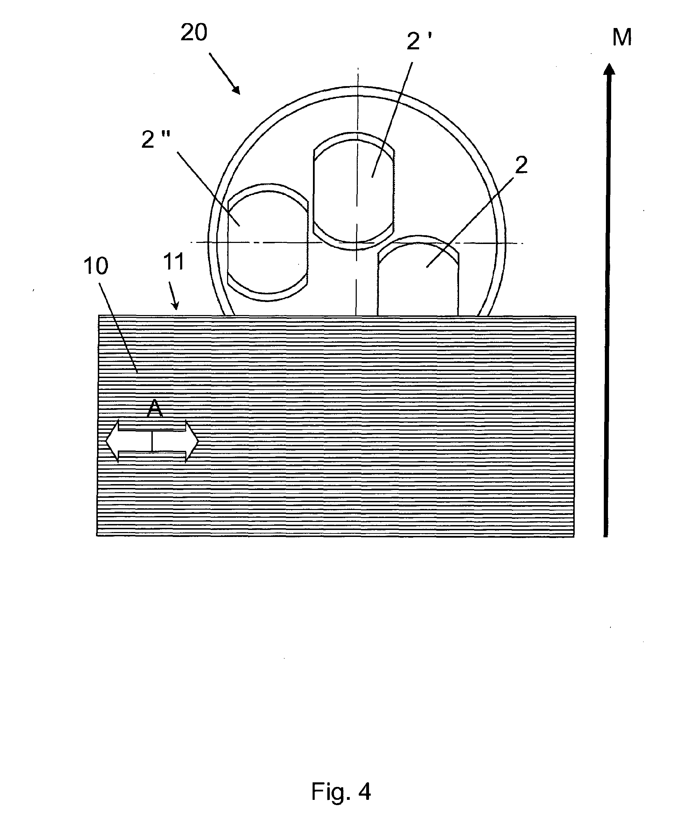

**Fig. 4** zeigt eine schematische Aufsicht der Ultraschall-Empfängerelemente 2, 2', 2" der in **Fig. 2** gezeigten Vorrichtung 20. Zudem ist in **Fig. 4** eine Materialbahn 10, deren Kante 11 detektiert werden soll, gezeigt. Üblicherweise bewegt sich die Materialbahn in einer Laufrichtung A, während die Kante 11 der Materialbahn 10 detektiert wird. Allerdings ist auch eine Detektion der Kante 11 möglich, wenn die Materialbahn 10 sich nicht bewegt.

Wie in **Fig. 4** zu sehen, überstreicht die Materialbahn 10 das Ultraschall-Empfängerelement 2 teilweise, während die übrigen Ultraschall-Empfängerelemente 2', 2" nicht überstrichen werden. Das Ultraschall-Senderelement 3 (nicht in **Fig. 4** gezeigt) befindet sich senkrecht zu Zeichenebene in Richtung des Betrachters und sendet Ultraschall-Signale in Richtung der Ultraschall-Empfängerelemente 2, 2', 2".

Somit wird der Anteil des von dem Ultraschall-Senderelement 3 ausgesendeten Ultraschallsignals, das die Ultraschall-Empfängerelemente 2, 2', 2" erreicht, durch die Anwesenheit der Materialbahn reduziert, da ein Teil des ausgesendeten Ultraschallsignals von der Materialbahn reflektiert und/oder absorbiert wird. Durch die räumliche Anordnung der Ultraschall-Empfängerelemente 2, 2', 2" führt diese Reduktion des Ultraschallsignals (insofern die Kante 11 der Materialbahn innerhalb eines Messbereichs liegt), zu einer ungleichmäßigen Reduktion des Messsignals der verschiedenen Ultraschall-Empfängerelemente 2, 2', 2". So wird in **Fig. 4** das Messsignal der Ultraschall-Empfängerelemente 2', 2" durch die Anwesenheit der Materialbahn 10 nicht beeinflusst, während das Messsignal des Ultraschall-Empfängerelements 2 reduziert wird.

Folglich kann aus der Reduktion des Messsignals geschlossen werden, dass sich die Kante 11 der Materialbahn 10 innerhalb des Messbereichs befindet. Darüber hinaus kann auch die Lage der Kante 11 der Materialbahn 10 im Messbereich bestimmt werden. So kann aus der Reduktion des Messsignals des Ultraschall-Empfängerelements 2 auf einen Bruchteil des Messsignals bei Abwesenheit der Materialbahn 10 ermittelt werden, welcher Anteil der Fläche des Ultraschall-Empfängerelements 2 von der Materialbahn 10 überstrichen wird. Dadurch liegt die Lage der Kante 11 fest. Da die Ultraschall-Empfängerelemente 2, 2', 2" in **Fig. 4** so angeordnet sind, dass ihre Messbereiche in einer Messrichtung M direkt aneinander grenzen (nicht gezeigt in **Fig 4**), kann die Lage der Kante 11 der Materialbahn 10 in einem gesamten Messbereich bestimmt werden. Alternativ können sich die Messbereiche der Ultraschall-Empfängerelemente 2, 2', 2" auch überlappen. Damit kann sichergestellt werden, dass im Grenzbereich der einzelnen Ultraschall-Empfängerelemente 2, 2', 2" die Lage der Kante 11 der Materialbahn 10 zuverlässig detektiert werden kann.

Die in **Fig. 2** bis **Fig. 4** gezeigte Vorrichtung 20 kann einen Messbereich von mehr als 10 mm, mehr als 20 mm oder mehr als 50 mm haben. Es kann damit ein Messbereich bereitgestellt werden, der die komplette Breite einer Materialbahn überstreicht. Damit ist es möglich, beide Kanten einer Materialbahn zu detektieren. Aus dieser Information kann, neben der Lage der Materialbahn, die Breite einer Materialbahn ermittelt werden. Alternative kann eine Dehnung oder Stauchung der Materialbahn ermittelt werden durch Vergleich einer ermittelten Breite der Materialbahn mit einer Soll-Breite der Materialbahn.

Häufig liegt die Messrichtung der Vorrichtung senkrecht zu einer Laufrichtung der Materialbahn (oder senkrecht zu der Lage einer Kante der Materialbahn). Allerdings ist es auch möglich, eine Messrichtung zu wählen, die schräg zu der Laufrichtung der Materialbahn liegt. Das kann eine geeignete Anordnung der Ultraschall-Empfängerelemente beinhalten (zum Beispiel ein Drehen der in **Fig. 4** gezeigten Anordnung um einen bestimmten Winkel). Alternativ kann eine Auswertschaltung der Vorrichtung so konfiguriert sein, dass eine Messrichtung schräg zur Laufrichtung der Materialbahn bestimmt wird.

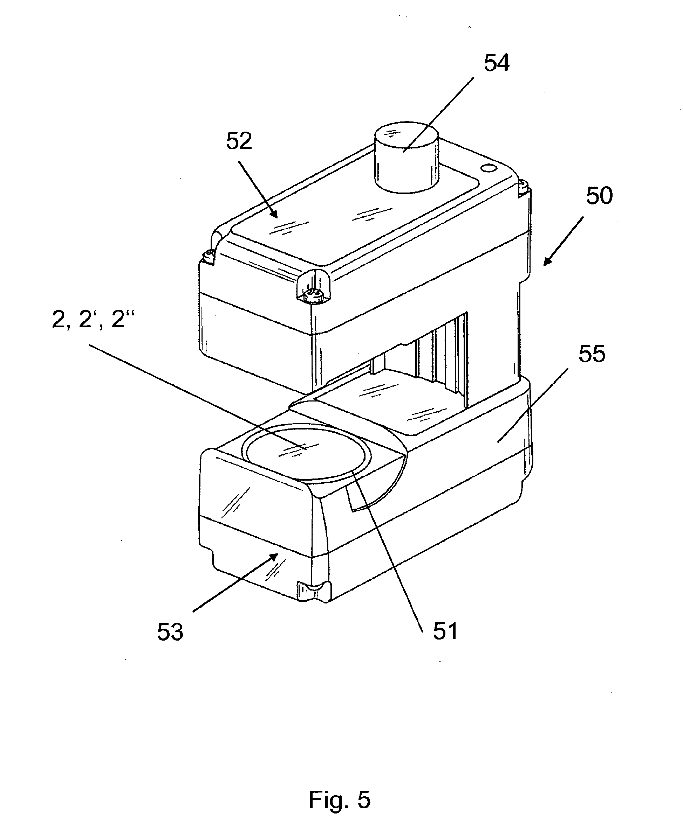

**Fig. 5** zeigt eine weitere erfindungsgemäße Vorrichtung 50 zum Detektieren einer Kante einer Materialbahn. Wiederum umfasst die Vorrichtung 50 ein Gehäuse mit zwei Armen 52, 53, an denen mehrere Ultraschall-Empfängerelemente 2, 2', 2" und ein Ultraschall-Senderelement (nicht in **Fig. 5** gezeigt) angeordnet sind. Die mehreren Ultraschall-Empfängerelemente 2, 2', 2" weisen ein gemeinsames Ultraschall-Transducerelement auf. Zusätzlich oder alternativ kann die Vorrichtung 50 auch mehrere Ultraschall-Senderelemente umfassen, die ein gemeinsames Ultraschall-Transducerelement aufweisen. Eine mögliche Ausgestaltung solcher Ultraschall-Senderelemente und/oder Ultraschall-Empfängerelemente umfasst den Einsatz eines Transducerelements, das ein Piezokomposit-Material umfasst. Einzelheiten dazu sind im Zusammenhang mit den **Fig. 7** bis **Fig. 9** beschrieben.

In **Fig. 5** sind die Ultraschall-Empfängerelemente 2, 2', 2" in ein einziges Bauelement 51 integriert. Diese Integration wird vereinfacht, da durch die Verwendung eines gemeinsamen Ultraschall-Transducerelements auch die übrigen Teile der Ultraschall-Empfängerelemente 2, 2', 2" als integriertes Bauteil hergestellt werden können. So kann eine Strukturierung der Elektroden, die auf das gemeinsame Transducerelement aufgebracht werden, so angepasst werden, dass die einzelnen Ultraschall-Empfängerelemente 2, 2', 2"gebildet werden. Die einzelnen Ultraschall-Empfängerelemente 2, 2', 2" können dann separat ausgelesen werde. Das Messsignal kann über einen Ausgang 54 zur weiteren Verarbeitung bereitgestellt werden.

Wie in **Fig. 5** gezeigt, kann das integrierte Bauteil, dass die Ultraschall-Empfängerelemente 2, 2', 2" beinhaltet, mit einer glatten Oberfläche versehen werden und bündig in das Gehäuse 55 eingelassen werden. Das integrierte Bauteil in **Fig. 5** hat einen runden Umriss, allerding sind auch andere Umrissformen möglich, beispielsweise ein rechteckiger Umriss. Das gemeinsame Ultraschall-Transducerelement kann, wie in **Fig. 5** gezeigt, drei Ultraschall-Empfängerelemente 2, 2', 2" versorgen. Allerdings können auch zwei Ultraschall-Empfängerelemente ein gemeinsames Ultraschall-Transducerelement aufweisen. Weiterhin können vier oder mehr, fünf oder mehr oder zehn oder mehr Ultraschall-Empfängerelemente ein gemeinsames Ultraschall-Transducerelement aufweisen. Damit können Messbereiche von mehr als 10 mm, mehr als 20 mm oder mehr als 50 mm realisiert werden.

Genau wie im Zusammenhang mit **Fig. 5** bezüglich der Ultraschall-Empfängerelemente beschrieben, können auch zwei oder mehr Ultraschall-Senderelemente ein gemeinsames Ultraschall-Transducerelement aufweisen.

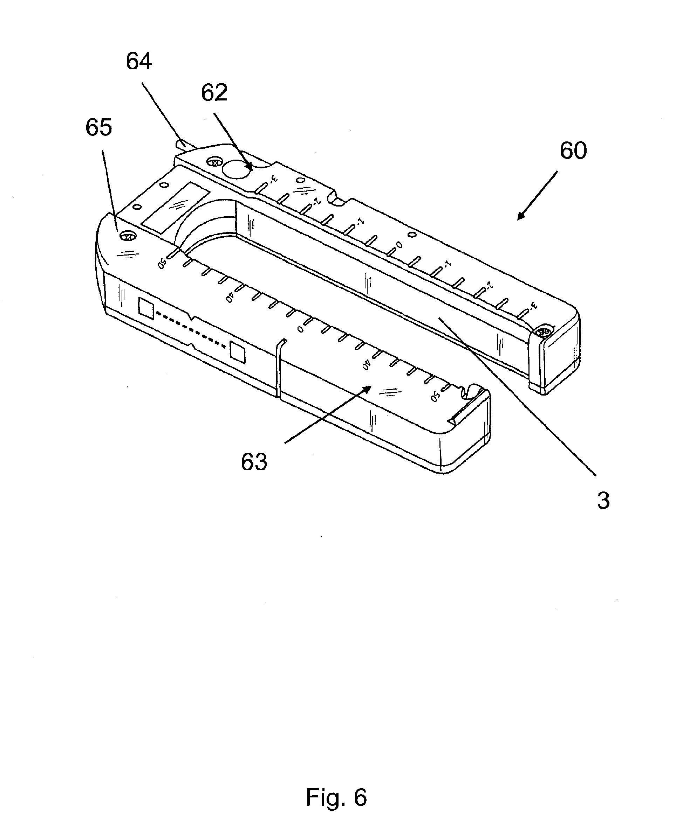

**Fig. 6** zeigt eine weitere erfindungsgemäße Vorrichtung 60 zum Detektieren einer Kante einer Materialbahn. Die Vorrichtung 60 umfasst mindestens einen Ultraschallsensor, wobei der Ultraschallsensor ein Ultraschall-Senderelement 3 und ein Ultraschall-Empfängerelement (nicht in **Fig. 6** gezeigt) umfasst, wobei ein Ultraschall-Transducerelement des Ultraschall-Senderelements einstückig ausgebildet ist und wobei das Ultraschall-Transducerelement des Ultraschall-Senderelements einen Messbereich von mehr als 10 mm senkrecht zur Laufrichtung der Materialbahn vollständig abzudecken, in dem die Kante der Materialbahn detektiert werden kann. Auch ein Ultraschall-Transducerelement des Ultraschall-Empfängerelements kann in gleicher Weise einstückig ausgebildet sein.

Alternativ können in einer Vorrichtung wie in **Fig. 6** gezeigt mehrere einstückige Ultraschall-Transducerelemente angeordnet sein, die jeweils einen Messbereich von mehr als 10 mm senkrecht zur Laufrichtung der Materialbahn vollständig abzudecken. Zum Beispiel kann der Messbereich mehr als 25 oder mehr als 50 mm in einer Messrichtung senkrecht zur senkrecht zur Laufrichtung der Materialbahn abgedeckt werden.

Auch können, wie im Zusammenhang mit **Fig. 7** bis **Fig. 9** gezeigt, auf jedem der einstückigen Ultarschall-Transducerelemente zwei oder mehr Ultraschall-Senderelemente und/oder Ultraschall-Empfängerelemente angeordnet werden.

Die in **Fig. 6** gezeigten Vorrichtung 60 hat ein Gehäuse 65, das zwei Arme 62, 63 beinhaltet. Das Ultraschall-Senderelement und Ultraschall-Empfängerelement sind auf jeweils unterschiedlichen Armen angebracht. Die Messrichtung der Vorrichtung in **Fig. 6** verläuft entlang der Ausdehnung der Arme 62, 63.

Auf dem einstückigen Ultraschall-Transducerelement der Senderseite können, wie in Zusammenhang mit **Fig. 5** beschreiben, zwei oder mehr Ultraschall-Senderelemente gebildet werden. Zusätzlich oder alternativ können auf dem einstückigen Ultraschall-Transducerelement der Empfängerseite, wie ebenfalls in Zusammenhang mit **Fig. 5** beschreiben, zwei oder mehr Ultraschall-Empfängerelemente gebildet werden. Allerdings kann sowohl auf der Senderseite als auch auf der Empfängerseite auch ein einziges Ultraschall-Senderelement beziehungsweise Ultraschall-Empfängerelement gebildet werden.

Der Ultraschallsensor in **Fig. 6** kann dazu ausgelegt sein, einen Messbereich von mehr als 20 mm oder mehr als 50 mm senkrecht zur Laufrichtung der Materialbahn vollständig abzudecken. Auch diese großen Messbereiche können unter Verwendung eines einteiligen Ultraschall-Transducerelemente auf Sender- und/oder Empfängerseite realisiert werden. Alternativ ist auch möglich, diese Messbereiche durch zwei oder mehr angrenzende oder überlappende Messbereiche von 10 oder mehr Millimetern zu überstreichen, wobei die Ultraschall-Transducerelemente auf Sender- und/oder Empfängerseite in jedem Messbereich einteilig sind.

Wie in **Fig. 6** gezeigt, ist das Ultraschall-Senderelement 3 in ein längliches, rechteckiges Bauteil integriert. Eine mögliche Ausgestaltung einteiliger Ultraschall- Transducerelements umfasst den Einsatz eines Piezokomposit-Material im Ultraschall-Transducerelement. Einzelheiten dazu sind im Zusammenhang mit den **Fig. 7** bis **Fig. 9** beschrieben. Über einen Ausgang 64 können die Messsignale der Vorrichtung 60 ausgelesen werden.

**Fig. 7** bis **Fig. 9** zeigen Beispiele von einteiligen Ultraschall-Transducerelementen und mehreren Ultraschall-Senderelementen und Ultraschall-Empfängerelementen mit einem gemeinsamen Ultraschall-Transducerelement. Auch gezeigt sind Anordnungen von Ultraschäll-Senderelementen und Ultraschall-Empfängerelementen, in denen ein einzelnes Ultraschall-Senderelement zwei oder mehr Ultraschall-Empfängerelemente mit einem Ultraschall-Nutzsignal beaufschlagt.

Die Ultraschall-Senderelemente und Ultraschall-Empfängerelemente der **Fig. 7** bis **Fig. 9** können Ultraschall-Transducerelemente enthalten, die ein Piezokomposit-Materialen umfassen. Beispielsweise kann ein Piezo-Kompositmaterial ein Verbund aus einer Piezokeramik (zum Beispiel Blei-Zirkonat-Titanat) und einem Polymer (zum Beispiel ein Epoxidharz oder ein Polurethan) sein (das entweder auch piezoelektrisch aktiv sein kann oder ein passiver Bestandteil des Piezo-Kompositmaterial ist). Dabei können Piezokeramik-Strukturen regelmäßig in einer Polymermatrix eingebettet sein. Beispielsweise kann das Piezokompositmaterial in Form einer Platte vorliegen (die sich in zwei Raumrichtungen erheblich stärker ausdehnt als in der dritten Raumrichtung, so dass sich zwei ausgedehnte Flächen und eine schmale Seite bilden).

In einer solchen Platte kann die Piezokeramik in Form von Stäben oder Röhren in dem Polymer eingebettet sein, wobei sich die Stäbe oder Röhren entlang der schmalen Seite der Platte erstrecken. In dieser Konfiguration kann durch auf den gegenüberliegenden (ausgedehnten) Flächen der Platte durch Elektroden eine Spannung über die schmale Seite angelegt werden. In Folge der angelegten Spannung können die Piezokeramik-Strukturen Ultraschallwellen erzeugen, die sich in einer Richtung senkrecht zu den ausgedehnten Flächen von der Platte entfernt.

Umgekehrt können senkrecht zu den ausgedehnten Flächen der Platte auftreffende Ultraschallwellen dazu führen, dass sich über die schmale Seite der Platte aufgrund der piezoelektrischen Aktivität der Piezokeramik-Strukturen eine Spannung aufbaut. Durch das Messen dieser Spannung können Rückschlüsse über einen Schalldruck der einfallenden Ultraschallwelle und/oder einer Fläche der Platte, auf die die einfallende Welle auftrifft, gemacht werden.

Somit können die in Zusammenhang mit **Fig. 7** bis **Fig. 9** beschriebenen Elemente bei entsprechender Beschaltung sowohl als Ultraschall-Senderelemente als auch als Ultraschall-Empfängerelemente betrieben werden. Zum Beispiel können diese Elemente in den in **Fig. 2****,** **Fig. 5** oder **Fig. 6** gezeigten Vorrichtungen eingesetzt werden.

In einer bevorzugten Ausführungsform kann eine Platte eines Piezo-Kompositmaterial ein Komposit aus piezokeramischen Fasern und einem Polymer enthalten. Dieses Komposit aus piezokeramischen Fasern und einem Polymer besteht aus piezokeramischen Faserbündeln, die mit einem Polymer (zum Beispiel einem Epoxidharz oder einem Polyurethan) infiltriert sind. Platten dieses Komposits können in beliebigen Formen, zum Beispiel mit rundem oder rechteckigem Umriss hergestellt werden. Typische Volumenanteile der piezokeramischen Fasern liegen zwischen 20 und 80%. Die schmale Seite der Platte kann beispielsweise zwischen 100 µm und 5 cm dick sein. Der Faserdurchmesser der piezokeramischen Fasern kann zwischen 50 µm und 1 mm liegen. Mit solchen Platten können Resonanzfrequenzen zwischen 20 kHz und 400 KHz erreicht werden, so dass Ultraschall-Sender und/oder Ultraschall-Empfänger hergestellt werden können, die mit Ultraschall in einem Frequenzbereich zwischen 20 kHz und 400 KHz arbeiten. Die jeweilige Resonanzfrequenz kann dabei durch die Dicke der Platte festgelegt werden. Solche piezokeramischen Faserkompositplatten können durch Schneiden von Ausgansgblöcken des Materials hergestellt werden.

In jeder der **Fig. 7** bis **Fig. 9** sind jeweils drei Ansichten eines Ultraschall-Senderelements 3 als auch mehrerer Ultraschall-Empfängerelemente 2..2'ⁿ mit einem gemeinsamen Ultraschall-Transducerelement 22, 32 gezeigt. Wie bereits erwähnt, ist jedoch möglich jedes der gezeigten Elemente auch in jeweils gegenteiliger Funktion zu betreiben. Die oberen Figuren (**Fig. 7a****, Fig. 7d,** **Fig. 8a****, Fig. 8d****,** **Fig. 9a** und **Fig. 9d**) zeigen eine schematische Draufsicht des jeweiligen Elements von der Seite, die im Betrieb der Materialbahn, deren Kante detektiert werden soll, abgewandt ist. Die unteren Figuren (**Fig. 7c**, **Fig. 7f**, **Fig. 8c****, Fig. 8f,** **Fig. 9c** und **Fig. 9f**) zeigen eine schematische Draufsicht des jeweiligen Elements von der Seite, die im Betrieb der Materialbahn, deren Kante detektiert werden soll, zugewandt ist. Die mittleren Figuren (**Fig. 7b****, Fig. 7e,** **Fig. 8b****, Fig. 8e,** **Fig. 9b** und **Fig. 9e**) zeigen eine schematische Ansicht von der Seite (d.h. aus einer Ebene, die parallel zu einer Ebene verläuft, in der die sich die Materialbahn befindet).

Alle in den **Fig. 7** bis **Fig. 9** gezeigten Elemente weisen eine durchgängige, flächige Elektrode 23, 33 auf der jeweils der Materialbahn abgewandten Seite auf. Die Ultraschall-Senderelemente 3 weisen auch auf der der Materialbahn zugewandten Seite eine durchgängige, flächige Elektrode 31 auf. Folglich weisen die Ultraschallsensoren der **Fig. 7** bis **Fig. 9** jeweils nur ein Ultraschall-Senderelement auf, dass alle Ultraschall-Empfängerelemente mit einem Ultraschall-Nutzsignal beaufschlagt.

Die in den **Fig. 7** bis **Fig. 9** dargestellten Elektroden können aus dünnen Metallschichten (zum Beispiel Gold oder Silber) bestehen. Diese können durch gängige Dünnschicht-Abscheidungstechniken, zum Beispiel durch Sputtern, hergestellt werden. Ebenfalls möglich ist die Herstellung der Elektroden durch Drucken leitfähiger Materialien (zum Beispiel Silberpartikel in Lösung).

In den Fig. **7d** bis **7f** ist eine erste Ausführungsform gezeigt, in der durch eine strukturierte Elektrode mehrere Empfängerbereiche 21a bis 21n geformt werden, die die Ultraschall-Empfängerelemente 2 bis 2'ⁿ bilden. Jedes der so gebildeten Ultraschall-Empfängerelemente 2 bis 2'ⁿ kann in dem jeweiligen Empfängerbereich 21a bis 21n kontaktiert werden und ist somit separat auslesbar. Das Ultraschall-Transducerelement in **Fig. 7d** bis **Fig. 7f** hat einen trapezoiden Umriss. Die Metallisierung auf der der Materialbahn zugewandte Seite des Ultraschall-Transducerelements ist durch Aussparungen 24 strukturiert, wobei die Aussparungen 24 schräg zu der Laufrichtung der Materialbahn verlaufen. Damit wird gewährleistet, dass, falls die Kante der Materialbahn einen Randbereich eines Ultraschall-Empfängerelements 2 bis 2'ⁿ abdeckt, sie gleichzeitig auch einen Randbereich eines anderen Ultraschall-Empfängerelemente 2 bis 2'ⁿ abdeckt. Damit kann die Empfindlichkeit der Vorrichtung im Übergangsbereich zwischen zwei Ultraschall-Empfängerelementen 2 bis 2'ⁿ erhöht werden.

Überdeckt eine Materialbahn einen Teil oder einen gesamten Empfängerbereich 21a bis 21n, so wird ein von dem jeweiligen Bereich abgreifbares Messsignal reduziert. Damit kann, mit Hilfe einer Auswertschaltung, aus den Messsignalen der Ultraschall-Empfängerelemente 2 bis 2'ⁿ eine Lage der Kante der Materialbahn bestimmt werden.

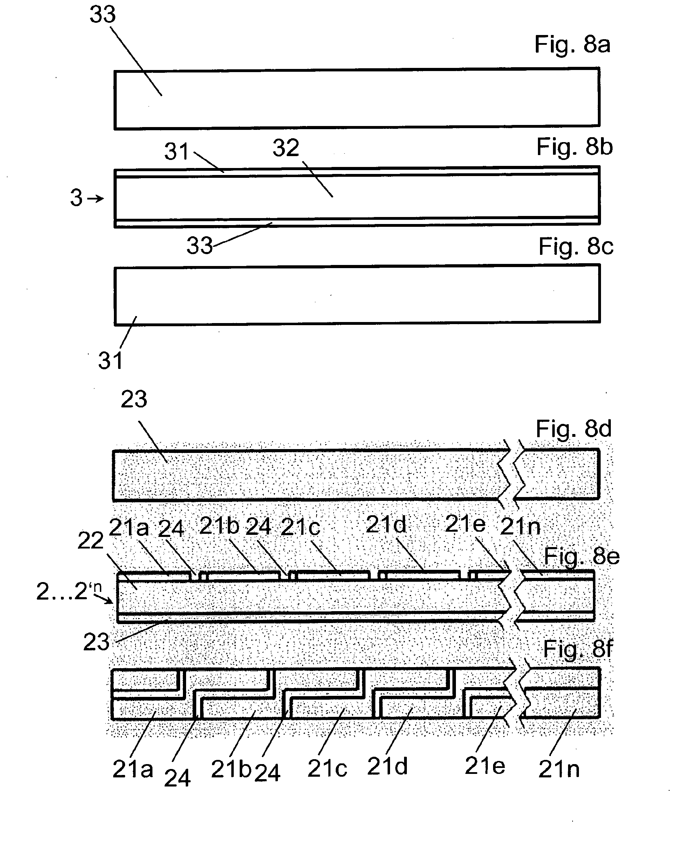

Die in **Fig. 8d** bis **Fig. 8f** gezeigten Ultraschall-Empfängerelemente 2 bis 2'ⁿ werden, wie die in **Fig. 7d** bis **Fig. 7f** gezeigten Ultraschall-Empfängerelemente 2 bis 2'ⁿ, durch Aussparungen 24 in einer Metallisierung der Materialbahn zugewandten Seite des Ultraschall-Transducerelements gebildet. In **Fig. 8e** und **Fig. 8f** jedoch hat jede Aussparung 24 einen zweifach abgewinkelten Verlauf, wobei die Aussparung, beginnend von einer Kante der der Materialbahn zugewandten Seite des Ultraschall-Transducerelements, zunächst parallel zur Laufrichtung der Materialbahn verläuft. Nach einer vorbestimmten erste Länge (zum Beispiel der Hälfte der Ausdehnung der der Materialbahn zugewandten Seite des Ultraschall-Transducerelements parallel zur Laufrichtung der Materialbahn) knickt die Aussparung um ungefähr 90° ab, und verläuft dann senkrecht zur Laufrichtung der Materialbahn für eine vorbestimmte zweite Länge. Dann knickt die Aussparung 24 erneut um etwa 90° ab und verläuft bis zu der der Startkante gegenüberliegenden Kante der der Materialbahn zugewandten Seite des Ultraschall-Transducerelements. Somit werden komplex geformte Ultraschall-Empfängerelemente 2 bis 2'ⁿ gebildet, deren Oberfläche jeweils zwei rechteckige Bereiche aufweist, die miteinander verbunden sind. Mit dieser Geometrie überstreicht die Kante der Materialbahn fast über den gesamten Messbereich in jeder Lage zwei Ultraschall-Empfängerelemente 2 bis 2'ⁿ, die Messbereiche aneinander grenzender Ultraschall-Empfängerelemente 2 bis 2'ⁿ überlappen sich also. Damit können zur Detektion der Kante der Materialbahn fast immer zwei Messsignale verwendet werden, was die Empfindlichkeit der Messung erhöhen kann.

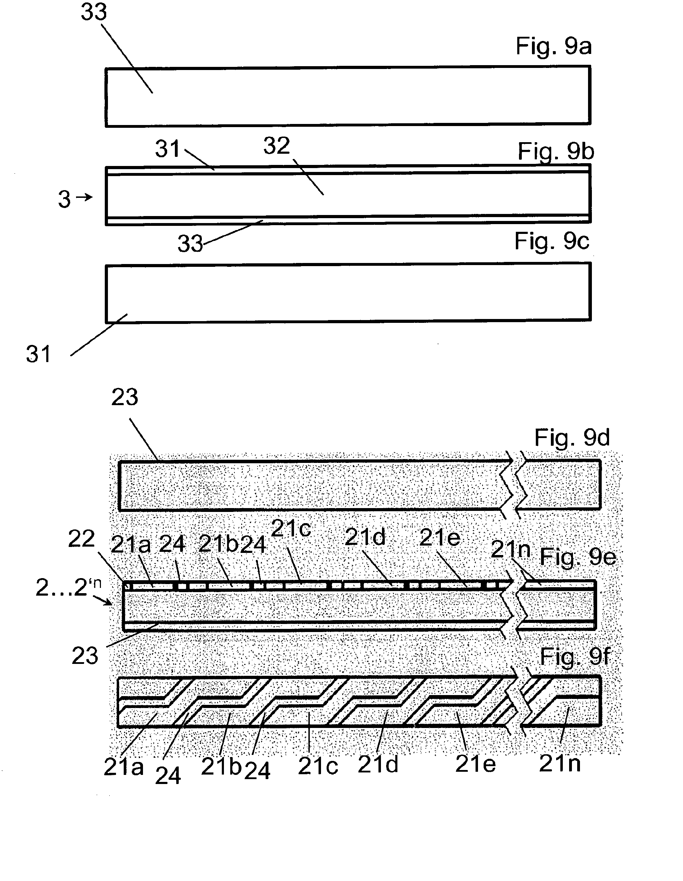

Eine weitere Ausgestaltung dieses Prinzips ist in den **Fig. 9e** bis **Fig. 9f** gezeigt. Hier weist die Metallisierung der der Materialbahn zugewandten Seite ebenfalls zwei Knicke auf, die jedoch beide größer als 90° sind. Der Verlauf der Aussparungen 24 ist ansonsten wie in **Fig. 8f** gezeigt. Die Knicke mit einem Winkel größer als 90° führen dazu, dass die Kante der Materialbahn über dem gesamten Messbereich in jeder Lage zwei Ultraschall-Empfängerelemente 2 bis 2'ⁿ überstreicht.

Über die in den **Fig. 7** bis **Fig. 9** gezeigten Geometrien hinaus können die Ultraschall-Empfängerelemente 2 bis 2'ⁿ auch mit anderen Formen gebildet werden. Die Herstellung kann unter Verwendung von Schattenmasken beim Aufdampf-oder Sputterprozess erfolgen, so dass durch die Form der Maske beinahe beliebige Muster von Aussparungen erzeugt werden können. Gleiches gilt, wenn eine flächige Metallisierung aufgebracht wird, und die Aussparungen dann in die Metallisierung geschrieben werden, zum Beispiel unter Verwendung von Laser-Ablationstechniken.

In **Fig**. **10** ist eine Vorrichtung 100 gezeigt, die neben einer Sensoreinheit 120 (hier können beispielsweise die Vorrichtungen aus **Fig. 2****,** **Fig. 5** oder **Fig. 6** eingesetzt werden) des Weiteren noch eine Vorrichtung zum Korrigieren eines seitlichen Versatzes 110 in der Materialbahn 10 beinhaltet. Die Materialbahn 10 läuft in Laufrichtung A, wobei eine Kante 11 der Materialbahn innerhalb eines Messbereichs der Sensoreinheit 120 verläuft. Diese Sensoreinheit 120 ist dazu ausgelegt, zu einem vorbestimmten Zeitpunkt (zum Beispiel periodisch oder auch kontinuierlich) die Lage der Kante 11 der Materialbahn 10 zu bestimmen. Die Vorrichtung 100 weist eine Auswerteschaltung auf, die die Messsignale eines Ultraschallsensors der Sensoreinheit 120 empfängt und daraus die Lage der Kante 11 der Materialbahn 10 bestimmt. Wenn der Ultraschallsensor mehrere Ultraschall-Empfängerelemente aufweist, kann die Auswerteschaltung die einzelnen Messsignale auswerten, um die Lage der Kante 11 zu bestimmen, wie oben beschrieben. Zum Beispiel kann die Auswertschaltung für jedes Ultraschall-Empfängerelement auf eine Tabelle zurückgreifen, in der die zu einem bestimmten Messsignal korrespondierenden Lagen der Kante 11 hinterlegt sind. Durch einen Vergleich eines aktuellen Messsignals mit den hinterlegten Werten kann die Lage der Kante 11 bestimmt werden. Die Auswertschaltung kann im Gehäuse der Sensoreinheit 120 untergebracht sein, aber auch an anderen Stellen innerhalb der Vorrichtung 100.

Die von der Auswertschaltung bestimmte Lage der Kante 11 der Materialbahn 10 kann dann dazu verwendet werden, einen lateralen Versatz der Materialbahn von einer hinterlegten Soll-Position zu ermitteln. Dieser Vergleich kann ebenfalls in der Auswertschaltung erfolgen, aber auch in einer weiteren Schaltung. Wenn die Größe eines lateralen Versatzes bestimmt worden ist, kann mit Hilfe dieser Größe die Vorrichtung zum Korrigieren eines seitlichen Versatzes 110 gespeist werden, die dazu ausgelegt ist, einen lateralen Versatz zu korrigieren.

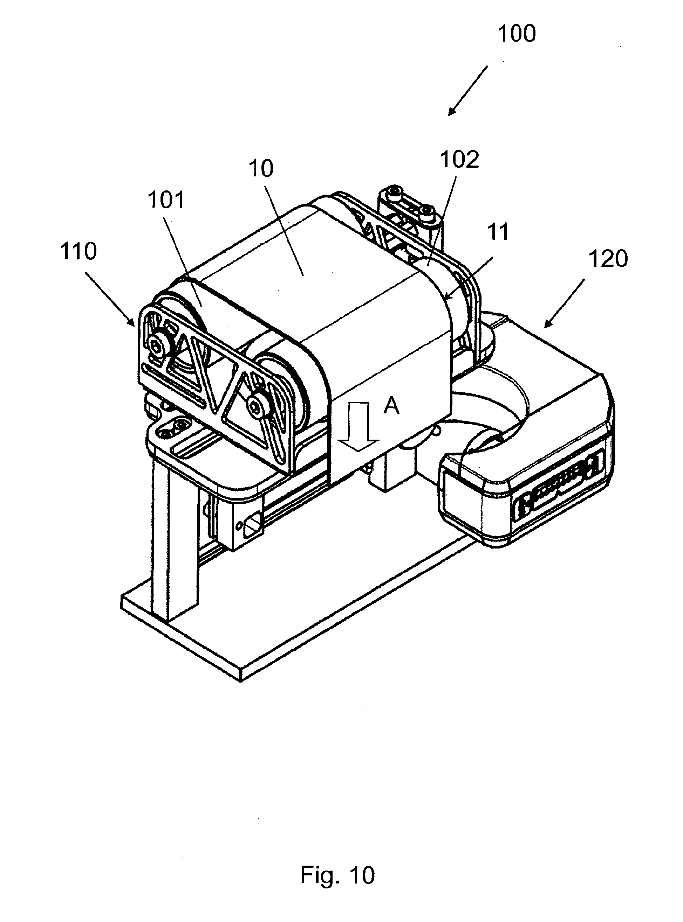

Im Beispiel von Fig. 10 umfasst die Vorrichtung zum Korrigieren eines seitlichen Versatzes 110 zwei Rollen 101, 102, die drehbar angebracht sind. Je nach Größe des lateralen Versatzes werden die zwei Rollen 101, 102 geschwenkt, um den Versatz zu korrigieren.

Auch wenn die Sensoreinheit 120 keine Vorrichtung zum Korrigieren eines lateralen Versatzes beinhaltet, kann sie trotzdem ein oder mehrere Rollen umfassen, um die Materialbahn so zu führen, dass eine Kante der Materialbahn durch den Messbereich der Sensoreinheit 120 verläuft.

## Patentansprüche

1. Vorrichtung (20; 50; 60; 120) zum Detektieren einer Kante (11) einer Materialbahn (10), umfassend:
entweder einen Ultraschallsensor, der zwei oder mehr separat auslesbare Ultraschall-Empfängerelemente (2; 2'; 2"...2^{'n}) und ein oder mehr separat ansteuerbare Ultraschall-Senderelemente (3; 3'; 3 ") umfasst,
**gekennzeichnet dadurch dass** zwei oder mehr Ultraschall-Empfängerelemente (2; 2'; 2"...2^{'n}) ein gemeinsames Ultraschall-Transducerelement (22) aufweisen
oder einen Ultraschallsensor, der ein oder mehr separat auslesbare Ultraschall-Empfängerelemente (2; 2'; 2"...2^{'n}) und zwei oder mehr separat ansteuerbare Ultraschall-Senderelemente (3; 3'; 3") umfasst, **gekennzeichnet dadurch dass** zwei oder mehr Ultraschall-Senderelemente (3; 3'; 3") ein gemeinsames Ultraschall-Transducerelement (32) aufweisen.

2. Vorrichtung (20; 50; 60; 120) gemäß Anspruch 1, wobei die ein oder mehr Ultraschall-Senderelemente (3; 3'; 3") und die ein oder mehr Ultraschall-Empfängerelemente (2; 2'; 2"...2^{'n}) so angeordnet sind, dass die Materialbahn (11) zwischen den ein oder mehr Ultraschall-Senderelementen (3; 3'; 3") und den ein oder mehr Ultraschall-Empfängerelementen (2; 2'; 2"...2'ⁿ) durchlaufen kann, so dass die ein oder mehr Ultraschall-Senderelemente (3; 3'; 3") und die ein oder mehr Ultraschall-Empfängerelemente (2; 2'; 2"... 2'ⁿ) auf unterschiedlichen Seiten der Materialbahn (10) angeordnet sind.

3. Vorrichtung (20; 50; 60; 120) gemäß einem der vorangehenden Ansprüche, wobei jedem Ultraschall-Empfängerelement (2; 2'; 2"...2^{'n}) ein Messbereich zugeordnet ist, in dem es die Kante (11) der Materialbahn (10) detektieren kann, und wobei die Messbereiche in einer Messrichtung direkt aneinander grenzen oder überlappen.

4. Vorrichtung (20; 50; 60; 120) gemäß einem der vorangehenden Ansprüche, weiter umfassend:
ein Gehäuse, das einen ersten und einen zweiten Arm umfasst, wobei die ein oder mehr Ultraschall-Senderelemente (3; 3'; 3") an dem ersten Arm und die ein oder mehr Ultraschall-Empfängerelemente (2; 2'; 2"... 2^{,n}) an dem zweiten Arm angeordnet sind.

5. Vorrichtung (20; 50; 60; 120) gemäß Anspruch 1, wobei die ein oder mehr Ultraschall-Senderelemente (3; 3'; 3") und/oder die ein oder mehr Ultraschall-Empfängerelemente (2; 2'; 2"...2'ⁿ) Ultraschall-Transducerelemente (22; 32) umfassen, die ein Piezokomposit-Material umfassen, insbesondere wobei das Piezokomposit-Material ein Piezofaserkomposit-Material ist, das ein Polymer und Piezokeramikfasern umfasst.

6. Vorrichtung (20; 50; 60; 120) gemäß einem der vorangehenden Ansprüche, wobei die Ultraschall-Transducerelemente (22, 32) der ein oder mehr Ultraschall-Empfängerelemente (2; 2'; 2" ...2'ⁿ) und/oder der ein oder mehr Ultraschall-Senderelemente (3; 3'; 3") flächig ausgebildet ist, und
wobei gegenüberliegenden Flächen der Ultraschall-Transducerelemente (22, 32) der ein oder mehr Ultraschall-Empfängerelemente (2; 2'; 2"...2'ⁿ) und/oder der ein oder mehr Ultraschall-Senderelemente (3; 3'; 3") mit Metallisierungen versehen sind, um die ein oder mehr TransducerElemente (22, 32) elektrisch zu kontaktieren

7. Vorrichtung (20; 50; 60; 120) gemäß Anspruch 6 wobei die Metallisierungen der empfängerseitigen ein oder mehr Ultraschall-Transducerelemente (22) so gestaltet ist, dass auf einer den ein oder mehr Ultraschall-Senderelementen (3; 3'; 3 ") zugewandten Seite der empfängerseitigen ein oder mehr Ultraschall-Transducerelemente (22) zwei oder mehr nicht zusammenhängende Empfängerbereiche (21a;...21n) gebildet werden, die separat auslesbar sind, um zwei oder mehr der Ultraschall-Empfängerelemente (2; 2'; 2"...2^{'n}) zu bilden, insbesondere wobei die Metallisierungen der senderseitigen ein oder mehr Ultraschall-Transducerelemente (32) so gestaltet ist, dass auf einer den ein oder mehr Ultraschall-Empfängerelementen (2; 2'; 2"...2'ⁿ) zugewandten Seite der senderseitigen ein oder mehr Ultraschall-Transducerelementen (32) zwei oder mehr nicht zusammenhängende Senderbereiche gebildet werden, die separat ansteuerbar sind, um die zwei oder mehr Ultraschall-Senderelemente (3, 3', 3") zu bilden.

8. Vorrichtung (20; 50; 60; 120) gemäß Anspruch 7, wobei die zwei oder mehr nicht zusammenhängenden Empfängerbereiche (21a...21n) und/oder Senderbereiche durch Aussparungen (24) in der Metallisierung gebildet werden, insbesondere wobei die Aussparungen (24) zumindest teilweise schräg, senkrecht oder parallel zu einer Laufrichtung der Materialbahn (10) verlaufen.

9. Vorrichtung (20; 50; 60; 120) gemäß einem der vorangehenden Ansprüche, weiter umfassend eine Auswerteschaltung, die mit den Ultraschall-Empfängerelementen (2; 2'; 2"... 2'ⁿ) kommunikativ gekoppelt ist und dazu ausgelegt ist, aus von den Ultraschall-Empfängerelementen (2; 2'; 2"..,2'ⁿ) empfangen Messsignalen eine Lage der Kante (11) der Materialbahn (10) zu ermitteln

10. Vorrichtung (20; 50; 60; 120) gemäß Anspruch 9, weiter umfassend:
eine Korrekturvorrichtung (110), die dazu ausgelegt ist, die Lage der Kante (11) der Materialbahn (10) zu verändern basierend auf einem Vergleich eines Lagesignals, das die Auswerteschaltung erzeugt mit einem Soll-Lagesignal.

11. Vorrichtung (20; 50; 60; 120) gemäß einem der vorangehenden Ansprüche, weiter umfassend:
eine Vorrichtung zum Führen der Materialbahn (10),
wobei der Ultraschallsensor so angeordnet ist, dass er die Kante (11) einer Materialbahn (10) in einem vorbestimmten Messbereich detektieren kann.

12. Vorrichtung (20; 50; 60; 120) gemäß einem der vorangehenden Ansprüche, weiter umfassend eine Auswerteschaltung, die mit den Ultraschall-Empfängerelementen (2; 2'; 2"...2^{'n}) kommunikativ gekoppelt ist und dazu ausgelegt ist, aus von den Ultraschall-Empfängerelementen (2; 2'; 2"...2^{'n}) empfangenen Messsignalen eine Lage der Kante (11) und einer zweiten Kante der Materialbahn (10) oder eine Breite der Materialbahn (10) zu ermitteln.

13. Vorrichtung (20; 50; 60; 120) gemäß einem der vorangehenden Ansprüche, wobei die ein oder mehr Ultraschall-Senderelemente (3; 3'; 3") und die ein oder mehr Ultraschall-Empfängerelemente (2; 2'; 2"...2'n) auf der gleichen Seite der Materialbahn (10) angeordnet sind, wenn die Vorrichtung (20; 50; 60; 120) betriebsbereit ist, insbesondere weiter umfassend einen Reflektor, der dazu ausgelegt ist, zumindest ein Teil eines von dem ein oder mehr Ultraschall-Senderelementen (3; 3'; 3") ausgesendeten Ultraschallsignals in Richtung der ein oder mehr Ultraschall-Empfängerelemente (2; 2'; 2"...2^{'n}) zu reflektieren.

14. Vorrichtung (20; 50; 60; 120) gemäß einem der vorangehenden Ansprüche, wobei zumindest eines der ein oder mehr Ultraschall-Senderelemente (3; 3'; 3") dazu ausgelegt ist, auch als Ultraschall-Empfängerelement zu fungieren.

## Claims

1. An apparatus (20; 50; 60; 120) for detecting an edge (11) of a material web (10), comprising:
either an ultrasound sensor which comprises two or more separately readable ultrasound receiver elements (2; 2'; 2"...2^{'n}) and an ultrasound transmitter element (3; 3'; 3"),
**characterized in that** two or more ultrasound receiver elements (2; 2'; 2"...2^{'n}) have a common ultrasound transducer element (22)
or an ultrasound sensor which comprises one or more separately readable ultrasound receiver elements (2; 2'; 2"...2^{'n}) and two or more separately actuatable ultrasound transmitter elements (3; 3'; 3"),
**characterized in that** two or more ultrasound transmitter elements (3; 3'; 3") have a common ultrasound transducer element (32).

2. The apparatus (20; 50; 60; 120) according to Claim 1, wherein the one or more ultrasound transmitter elements (3; 3'; 3") and the one or more ultrasound receiver elements (2; 2'; 2"...2^{'n}) are arranged such that the material web (10) can pass between the one or more ultrasound transmitter elements (3; 3'; 3") and the one or more ultrasound receiver elements (2; 2'; 2"...2'ⁿ), with the result that the one or more ultrasound transmitter elements (3; 3'; 3") and the one or more ultrasound receiver elements (2; 2'; 2"...2'ⁿ) are arranged on different sides of the material web (10).

3. The apparatus (20; 50; 60; 120) according to any one of the preceding Claims, wherein each ultrasound receiver element (2; 2'; 2"...2'ⁿ) has an associated measurement range in which it can detect the edge (11) of the material web (10), and wherein the measurement ranges directly adjoin or overlap one another in a direction of measurement.

4. The apparatus (20; 50; 60; 120) according to any one of the preceding Claims, also comprising:
a housing which comprises a first and a second arm, wherein the one or more ultrasound transmitter elements (3; 3'; 3") are arranged on the first arm and the one or more ultrasound receiver elements (2; 2'; 2"...2'ⁿ) are arranged on the second arm.

5. The apparatus (20; 50; 60; 120) according to Claim 1, wherein the one or more ultrasound transmitter elements (3; 3'; 3") and/or the one or more ultrasound receiver elements (2; 2'; 2"...2'ⁿ) comprise ultrasound transducer elements (22; 32) which comprise a piezoelectric composite material, preferably wherein the piezoelectric composite material is a piezoelectric fibre composite material which comprises a polymer and piezoelectric ceramic fibres.

6. The apparatus (20; 50; 60; 120) according to any one of the preceding Claims, wherein the ultrasound transducer elements (22, 32) of the one or more ultrasound receiver elements (2; 2'; 2"...2'ⁿ) and/or of the one or more ultrasound transmitter elements (3; 3'; 3") are of two-dimensional design, and wherein opposite surface areas of the ultrasound transducer elements (22, 32) of the one or more ultrasound receiver elements (2; 2'; 2"...2'ⁿ) and/or of the one or more ultrasound transmitter elements (3; 3'; 3") are provided with metallizations in order to make electrical contact with the one or more transducer elements (22, 32).

7. The apparatus (20; 50; 60; 120) according to Claim 6, wherein the metallizations of the receiver-end one or more ultrasound transducer elements (22) are embodied such that a side of the receiver-end one or more ultrasound transducer elements (22) that faces the one or more ultrasound transmitter elements (3; 3'; 3") has two or more non-contiguous receiver regions (21a;...21n) formed on it which can be read separately in order to form two or more of the ultrasound receiver elements (2; 2'; 2"...2'ⁿ), preferably wherein the metallizations of the transmitter-end one or more ultrasound transducer elements (32) are embodied such that a side of the transmitter-end one or more ultrasound transducer elements (32) that faces the one or more ultrasound receiver elements (2; 2'; 2"...2'ⁿ) has two or more non-contiguous transmitter regions formed on it which can be actuated separately in order to form the two or more ultrasound transmitter elements (3, 3', 3").

8. The apparatus (20; 50; 60; 120) according to Claim 7, wherein the two or more non-contiguous receiver regions (21a...21n) and/or transmitter regions are formed by cutouts (24) in the metallization, preferably wherein the cutouts (24) run at least to some extent obliquely, perpendicularly or parallel to a direction of movement of the material web (10).

9. The apparatus (20; 50; 60; 120) according to any one of the preceding Claims, also comprising an evaluation circuit which is communicatively coupled to the ultrasound receiver elements (2; 2'; 2"...2'ⁿ) and is designed to determine a position for the edge (11) of the material web (10) from measurement signals that are received by the ultrasound receiver elements (2; 2'; 2"...2'ⁿ).

10. The apparatus (20; 50; 60; 120) according to Claim 9, also comprising:
a correction apparatus (110) which is designed to alter the position of the edge (11) of the material web (10) on the basis of a comparison of a position signal produced by the evaluation circuit with a setpoint position signal.

11. The apparatus (20; 50; 60; 120) according to any one of the preceding Claims, also comprising:
an apparatus for guiding the material web (10),
wherein the ultrasound sensor is arranged such that it can detect the edge (11) of a material web (10) in a predetermined measurement range.

12. The apparatus (20; 50; 60; 120) according to any one of the preceding Claims, also comprising an evaluation circuit which is communicatively coupled to the ultrasound receiver elements (2; 2'; 2"...2'ⁿ) and is designed to determine a position for the edge (11) and for a second edge of the material web (10) or a width of the material web (10) from measurement signals that are received by the ultrasound receiver elements (2; 2'; 2"...2'ⁿ).

13. The apparatus (20; 50; 60; 120) according to any one of the preceding Claims, wherein the one or more ultrasound transmitter elements (3; 3'; 3") and the one or more ultrasound receiver elements (2; 2'; 2"...2'n) are arranged on the same side of the material web (10) when the apparatus (20; 50; 60; 120) is operational, preferably also comprising a reflector which is designed to reflect at least a portion of an ultrasound signal emitted by the one or more ultrasound transmitter elements (3; 3'; 3") in the direction of the one or more ultrasound receiver elements (2; 2'; 2"...2'ⁿ).

14. The apparatus (20; 50; 60; 120) according to any one of the preceding Claims, wherein at least one of the one or more ultrasound transmitter elements (3; 3'; 3") is designed to act as an ultrasound receiver element as well.

## Revendications

1. Dispositif (20 ; 50 ; 60 ; 120) destiné à détecter un bord (11) d'une bande de matériau (10), comprenant :
soit un capteur à ultrasons qui comprend deux éléments récepteurs d'ultrasons lisibles séparément (2 ; 2' ; 2"...2'ⁿ) ou plus et un ou plusieurs éléments émetteurs d'ultrasons pouvant être commandés séparément (3 ; 3' ; 3"),
**caractérisé en ce que** deux éléments récepteurs d'ultrasons (2 ; 2' ; 2"...2'ⁿ) ou plus comprennent un élément transducteur à ultrasons commun (22),
soit un capteur à ultrasons qui comprend un ou plusieurs éléments récepteurs d'ultrasons lisibles séparément (2 ; 2' ; 2"...2'ⁿ) et deux éléments émetteurs d'ultrasons pouvant être commandés séparément (3 ; 3' ; 3") ou plus,
**caractérisé en ce que** deux éléments émetteurs d'ultrasons (3 ; 3' ; 3") ou plus comprennent un transducteur à ultrasons commun (32).

2. Dispositif (20 ; 50 ; 60 ; 120) selon la revendication 1, dans lequel les un ou plusieurs éléments émetteurs d'ultrasons (3 ; 3' ; 3") et les un ou plusieurs éléments récepteurs d'ultrasons (2 ; 2' ; 2"... 2'ⁿ) sont agencés de manière à ce que la bande de matériau (11) puisse circuler entre les un ou plusieurs éléments émetteurs d'ultrasons (3 ; 3' ; 3") et les un ou plusieurs éléments récepteurs d'ultrasons (2 ; 2' ; 2"... 2'ⁿ) afin que les un ou plusieurs éléments émetteurs d'ultrasons (3 ; 3' ; 3") et les un ou plusieurs éléments récepteurs d'ultrasons (2 ; 2' ; 2"... 2'ⁿ) soient disposés sur des faces différentes de la bande de matériau (10).

3. Dispositif (20 ; 50 ; 60 ; 120) selon l'une quelconque des revendications précédentes, dans lequel, à chaque élément récepteur d'ultrasons (2 ; 2' ; 2"... 2'ⁿ) est associée une zone de mesure dans laquelle le côté (11) de la bande de matériau (10) peut être détecté, et dans lequel les zones de mesure sont directement adjacentes l'une à l'autre ou se chevauchent l'une l'autre dans la direction de mesure.

4. Dispositif (20 ; 50 ; 60 ; 120) selon l'une quelconque des revendications précédentes, comprenant en outre :
un boîtier qui comprend des premier et second bras, dans lequel les un ou plusieurs éléments émetteurs d'ultrasons (3 ; 3' ; 3") sont disposés sur le premier bras et les un ou plusieurs éléments récepteurs d'ultrasons (2 ; 2' 2"...2'ⁿ) sont disposés sur le second bras.

5. Dispositif (20 ; 50 ; 60 ; 120) selon la revendication 1, dans lequel les un ou plusieurs éléments émetteurs d'ultrasons (3 ; 3' ; 3") et/ou les un ou plusieurs éléments récepteurs d'ultrasons (2 ; 2' ; 2"...2'ⁿ) comprennent des éléments transducteurs à ultrasons (22 ; 32) qui comprennent un matériau piézocomposite et plus particulièrement, dans lequel le matériau piézocomposite comprend un matériau composite à fibre piézoélectrique qui comprend un polymère et des fibres de piézocéramique.

6. Dispositif (20 ; 50 ; 60 ; 120) selon l'une quelconque des revendications précédentes, dans lequel les éléments transducteurs à ultrasons (22, 32) des un ou plusieurs éléments récepteurs d'ultrasons (2 ; 2' ; 2"...2'ⁿ) et des un ou plusieurs éléments émetteurs d'ultrasons (3 ; 3' ; 3") sont réalisés de manière plane, et
dans lequel des surfaces opposées des transducteurs à ultrasons (22, 32) des un ou plusieurs éléments récepteurs d'ultrasons (2 ; 2' ; 2"...2'ⁿ) et/ou des un ou plusieurs éléments émetteurs d'ultrasons (3 ; 3' ; 3") sont munis de métallisations afin d'être mis en contact électrique avec les un ou plusieurs éléments transducteurs (22, 32).

7. Dispositif (20 ; 50 ; 60 ; 120) selon la revendication 6, dans lequel les métallisations des un ou plusieurs éléments transducteurs à ultrasons (22) sont conçues de manière à ce que, sur une face opposée aux un ou plusieurs éléments émetteurs d'ultrasons (3 ; 3' ; 3") des un ou plusieurs éléments transducteurs à ultrasons côté récepteur (22), deux ou plusieurs zones de réception contigües (21a ; ... 21n) pouvant être lues séparément soient formées, afin de former deux ou plusieurs des éléments récepteurs d'ultrasons (2 ; 2' ; 2"...2'ⁿ), et plus particulièrement, dans lequel les métallisations des un ou plusieurs éléments transducteurs à ultrasons côté émetteur (32) sont conçus de manière à ce que, sur une face opposée aux un ou plusieurs éléments récepteurs d'ultrasons (2 ; 2' ; 2"...2'ⁿ) des un ou plusieurs éléments transducteurs à ultrasons côté émetteur (32), deux ou plusieurs zones d'émission non contigües pouvant être commandées séparément soient formées, afin de former les deux éléments émetteurs d'ultrasons (3 ; 3' ; 3") ou plus.

8. Dispositif (20 ; 50 ; 60 ; 120) selon la revendication 7, dans lequel les deux zones de réception non contiguës (21a ; ... 21n) ou plus et/ou les deux zones d'émission non contigües ou plus sont formées par des évidements (24) dans la métallisation, et plus particulièrement, dans lequel les évidements (24) s'étendent au moins en partie de manière inclinée, perpendiculaire ou parallèle à une direction de déplacement de la bande de matériau (10).

9. Dispositif (20 ; 50 ; 60 ; 120) selon l'une quelconque des revendications précédentes, comprenant en outre un circuit d'évaluation qui est couplé par voie de communication aux éléments récepteurs d'ultrasons (2 ; 2' ; 2"...2'ⁿ) et est conçu pour déterminer à partir des signaux de mesure reçus par les éléments récepteurs d'ultrasons (2 ; 2' ; 2"...2'ⁿ) une position du bord (11) de la bande de matériau (10).

10. Dispositif (20 ; 50 ; 60 ; 120) selon la revendication 9, comprenant en outre :
un dispositif de correction (110) qui est conçu pour modifier la position du bord (11) de la bande de matériau (10) sur la base d'une comparaison d'un signal de position qui est généré par le circuit d'évaluation avec un signal de position nominale.

11. Dispositif (20 ; 50 ; 60 ; 120) selon l'une quelconque des revendications précédentes, comprenant en outre :
un dispositif destiné à guider la bande de matériau (10),
dans lequel le capteur à ultrasons est agencé de manière à ce qu'il puisse détecter le bord (11) d'une bande de matériau (10) dans une zone de mesure prédéterminée.

12. Dispositif (20 ; 50 ; 60 ; 120) selon l'une quelconque des revendications précédentes, comprenant en outre un circuit d'évaluation qui est couplé par voie de communication aux éléments récepteurs d'ultrasons (2 ; 2' ; 2"...2'ⁿ) et est conçu pour déterminer à partir des signaux de mesure reçus par les éléments récepteurs d'ultrasons (2 ; 2' ; 2"...2'ⁿ) une position du bord (11) et d'un deuxième bord de la bande de matériau (10) ou une largeur de la bande de matériau (10).

13. Dispositif (20 ; 50 ; 60 ; 120) selon l'une quelconque des revendications précédentes, dans lequel les un ou plusieurs éléments émetteurs d'ultrasons (3 ; 3' ; 3") et les un ou plusieurs éléments récepteurs d'ultrasons (2 ; 2' ; 2"...2'ⁿ) sont disposés sur la même face de la bande de matériau (10) lorsque le dispositif (20 ; 50 ; 60 ; 120) est prêt à fonctionner, et plus particulièrement, comprenant en outre un réflecteur qui est conçu pour réfléchir au moins une partie d'un signal ultrasonore émis par les un ou plusieurs éléments émetteurs d'ultrasons (3 ; 3' ; 3") dans la direction des un ou plusieurs récepteurs d'ultrasons (2 ; 2' ; 2"...2'ⁿ).

14. Dispositif (20 ; 50 ; 60 ; 120) selon l'une quelconque des revendications précédentes, dans lequel au moins l'un des un ou plusieurs éléments émetteurs d'ultrasons (3 ; 3' ; 3") est conçu pour fonctionner également en tant qu'élément récepteur d'ultrasons.
